# EUROPEAN PATENT APPLICATION

(11) **EP 2 763 274 A2**
(43) Date of publication of application: **06.08.2014**
(21) Application number: 14152925.5
(22) Date of filing: 28.01.2014
(51) Int. Cl.: H02J 7/00

(54) **Charging Apparatus and Charging Method**

(30) Priority: 04.02.2013 KR 20130012527
(71) Applicant: Samsung Electronics Co., Ltd, Gyeonggi-do 443-742 (KR)
(72) Inventor: Kim, Ki-suk, Gyeonggi-do (KR); Kim, Jin-hee, Gyeonggi-do (KR)
(74) Representative: Walaski, Jan Filip

(57) **Abstract**

A charging apparatus includes a plurality of charging ports configured to charge external devices; a switch unit configured to connect or block power to or from each of the plurality of charging ports; and a controller configured to control so that an amount of current being supplied to at least one of the plurality of charging ports is increased depending on a power connection status for each of the plurality of charging ports in a rapid charging mode.

## Description

The present invention relates to a charging apparatus and method. More particularly, embodiments relate to a charging apparatus that has a plurality of charging ports and can effectively charge external devices, and a charging method thereof.

As the use of mobile electronic devices, such as cell phones, electronic dictionaries, MP3 players, E-book devices, etc., increases, a variety of means for charging the mobile devices has emerged. Because maintaining a connection of mobile devices with a power source due is difficult due to the mobility of the mobile devices, the mobile devices are in general charged through a charging apparatus such as a stationary apparatus or a power cable. When the charging is performed through the stationary apparatus, the mobile device is connected to the stationary apparatus through a charging port such as a universal serial bus (USB) interface provided in the stationary apparatus. After the mobile device is connected to the stationary apparatus, the mobile device is supplied with the power from the stationary apparatus.

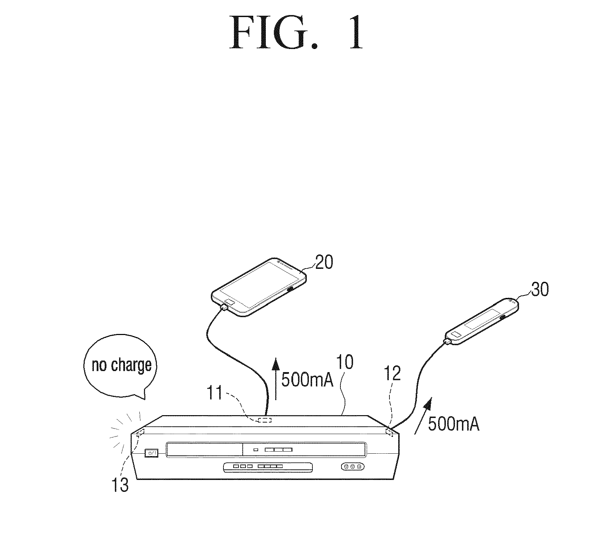

As the need for charging of the mobile devices increases, many stationary apparatuses have multiple charging ports. Such multiple charging ports allow a plurality of devices to be charged at once. For example, as illustrated in FIG. 1, a MP3 player and a smart phone can be charged at once through different USB interfaces.

However, in some cases, only some of the multiple charging ports charge the devices, but the other charging ports do not charge the devices. In other words, as illustrated in FIG. 1, a smart phone 20 is charged through a USB interface 11, a MP3 player 30 is charged through another USB interface 12, but no device is charged through the other USB interface 13.

So far, the stationary apparatuses are generally designed so that each of the multiple charging ports is supplied with a constant current. As illustrated in FIG. 1, each of the USB interfaces 11, 12 and 13 is designed to supply only a current of 500 mA in the USB 2.0 standard.

Accordingly, the current method has a problem in that when some of the multiple charging ports are used, power supplied to the other charging ports which are not used to charge a mobile device cannot be used. Accordingly, an amount of current which is supplied to the charging ports for the purpose of charging a mobile device is limited. Therefore, the power supplied to the charging apparatus is not used efficiently. For example, even when a user wants to charge some devices at a faster rate, if the amount of current being supplied to the charging ports is limited, faster charging is impossible.

Accordingly, methods and apparatuses, which allow the charging apparatus having the multiple charging ports to charge external devices quickly and efficiently, are required.

In an aspect of one or more embodiments, there is provided an apparatus and method to overcome the above drawbacks and other problems associated with the conventional arrangement. In an aspect of one or more embodiments, there is a charging apparatus that has a plurality of charging ports and can charge external devices quickly and efficiently and a charging method thereof.

In an aspect of one or more embodiments, there is provided a charging apparatus, which may include a plurality of charging ports configured to charge external devices; a switch unit configured to connect or block power to or from each of the plurality of charging ports; and a controller configured to control so that an amount of current being supplied to at least one of the plurality of charging ports is increased depending on a power connection status for each of the plurality of charging ports in a rapid charging mode.

The controller may be configured to control so that the amount of current being supplied to at least one of the plurality of charging ports is decreased in a normal charging mode.

In the rapid charging mode, the controller may be configured to control to block current to be supplied to the rest of plurality of charging ports except for a charging port in which rapid charging is performed.

The charging apparatus may include an input unit configured to allow a user to select a charging mode.

When other external device is connected to a charging port that is not used for charging of the external devices in the rapid charging mode, the controller may control to indicate information about whether the other external device can be charged in a display unit or to send the information to the other external device.

When a user input is received, the controller may connect the power to the charging port connected to the other external device, and may control so that the amount of current being supplied to the charging port connected to the external device is decreased.

The controller may determine an increased width of the amount of current by considering a type of the external device in the rapid charging mode.

When a charging mode is changed, the controller may control to send information for changing of the charging mode to the external device connected to the charging port of which the charging mode is changed.

The controller may control to calculate an estimated charging time of the external device which is being charged, and to send the estimated charging time to the external device which is being charged.

When a power of the charging apparatus is turned off, the controller may maintain current supply for the charging port connected to the external device being charged, and, after the charging is completed, may control the charging apparatus to go into a standby mode.

In an aspect of one or more embodiments, there is provided a charging method may include setting a charging mode of a charging port connected to an external device; and increasing, if the set charging mode is a rapid charging mode, an amount of current being supplied to the connected charging port depending on a power connection status for each of a plurality of charging ports including the connected charging port.

The charging method may include decreasing, if the set charging mode is a normal charging mode, the amount of current being supplied to the connected charging port.

The charging method may include blocking, if the set charging mode is the rapid charging mode, current to be supplied to the rest of the plurality of charging ports except for the connected charging port.

The charging method may include receiving a user input for selecting the charging mode.

The charging method may include indicating information about whether other external device can be charged in a display unit or sending the information to the other external device, if the other external device is connected to a charging port that is not used for charging of the external device, when the set charging mode is the rapid charging mode.

The charging method may include connecting, if a user input is received, the power to the charging port connected to the other external device, and decreasing the amount of current being supplied to the charging port connected to the external device for rapid charging.

The charging method may include the increasing an amount of current comprises determining an increased width of the amount of current by considering a type of the external device.

The charging method may include sending, if the charging mode is changed, information for changing of the charging mode to the external device connected to the charging port.

The charging method may include calculating an estimated charging time of the external device being charged, and sending the estimated charging time to the external device being charged.

The charging method may include maintaining, when a power of the charging apparatus is turned off, current supply for the charging port connected to the external device being charged, and allowing, after the charging is completed, the charging apparatus to go into a standby mode.

In an aspect of one or more embodiments, there is provided a charging apparatus including a plurality of charging ports configured to charge external devices, a switch to connect power to each of the plurality of charging ports and to block power to each of the charging ports; and a controller to control an amount of current being supplied to at least one of the plurality of charging ports depending on a power connection status of each of the plurality of charging ports in a rapid charging mode.

The controller may control the amount of current being supplied to at least one of the plurality of charging ports to decrease the amount of current being supplied to at least one of the plurality of charging ports in a normal charging mode.

In the rapid charging mode, the controller may block current to be supplied to the plurality of charging ports except for a charging port in which rapid charging is performed.

The controller may determine an increased amount of current by considering a type of the external device in the rapid charging mode.

In an aspect of one or more embodiments, the charging apparatus having a plurality of charging ports may charge an external device efficiently and quickly.

These and/or other aspects will become apparent and more readily appreciated from the following description of embodiments, taken in conjunction with the accompanying drawings in which:
FIG. 1 is a schematic view illustrating a charging apparatus to charge a plurality of external devices through a plurality of charging ports;
FIG. 2 is a block diagram illustrating a configuration of a charging apparatus according to an embodiment;
FIG. 3 is a block diagram illustrating a configuration of a charging apparatus according to an embodiment; and
FIGS. 4 to 6 are flowcharts illustrating a charging method according to an embodiment.

Reference will now be made in detail to embodiments, examples of which are illustrated in the accompanying drawings, wherein like reference numerals refer to the like elements (such as parts, components, and structures) throughout. Embodiments are described below by referring to the figures.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Further, dimensions of various elements in the accompanying drawings may be shown increased or decreased for assisting in a comprehensive understanding.

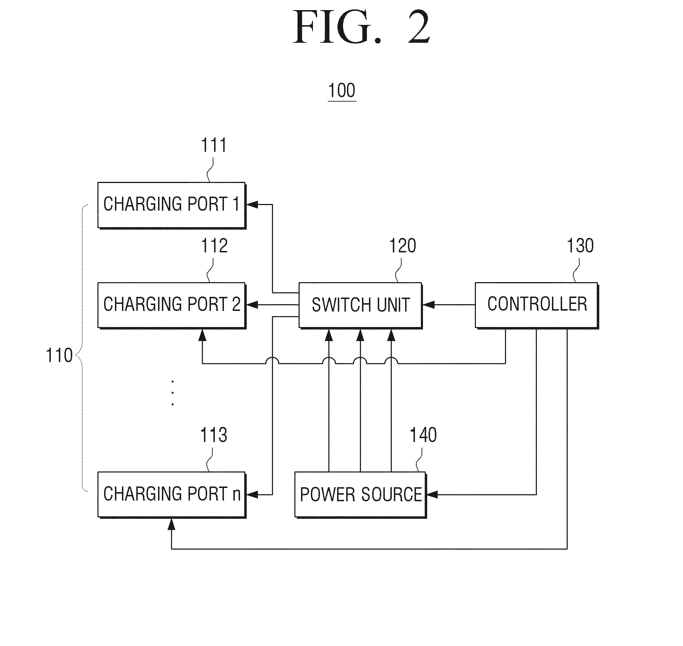

FIG. 2 is a block diagram illustrating a configuration of a charging apparatus 100 according to an embodiment.

Referring to FIG. 2, a charging apparatus 100 according to an embodiment includes charging ports 110, a switch unit 120, and a controller 130.

The charging ports 110 are configured to charge external devices. For example, the charging ports 110 may be a universal serial bus (USB) interface. The USB interface is a physical connector that can transmit and receive signals between devices according to the USB standard. In USB 3.0 standard, an amount of current to be supplied to a device is increased from 500 mA to 900 mA so that the device can be charged more quickly. However, the charging ports are not limited to the USB interface and may be applied to a variety of physical connectors between devices in addition to the USB interface.

As illustrated in FIG. 2, the charging apparatus according to an embodiment may be implemented to have a plurality of charging ports 111, 112, and 113. Each of the charging ports 111, 112, and 113 is connected with a cable for charging each of different devices.

The switch unit 120 is configured to connect or block each of the plurality of charging ports 111, 112, and 113 to or from a power source 140. The switch unit 120 may include a plurality of switches (not illustrated). At this time, each of the switches is connected to the power source 140 to block or pass current which incomes from the power source 140. Also, each of the switches is connected to each of the plurality of charging ports 111, 112, and 113 by a line, thereby blocking or passing the current flowing into each of the charging ports 111, 112, and 113 depending on a control signal of the controller 130. The control signal of the controller 130 varies depending on a charging mode as will be described later.

The controller 130 is configured to control the amount of current flowing into the charging ports depending on the charging mode. For example, if the charging mode is a rapid charging mode, the controller 130 may control to increase the amount of current to be supplied to at least one of the plurality of charging ports according to a power connection status for each of the plurality of charging ports 111, 112, and 113.

When the external device is connected to one of the plurality of charging ports 111, 112, and 113 of the charging apparatus, the charging is performed depending on the charging mode. Here, the charging mode refers to a technical method to charge the external devices.

For example, a charging mode set by default may be defined as a normal charging mode. The charging mode set by default may be defined as a method being charged through one of the charging ports when each of the plurality of charging ports 111, 112, and 113 is connected to each of the external devices different from one another and the uniform amount of current flows into the each of the plurality of charging ports 11, 112, and 113. For example, when a set top box 10 has three charging ports 11, 12, and 13 and the uniform current of 500 mA is supplied to the external devices connected to the three charging ports 11, 12, and 13 through each of the three charging ports 11, 12, and 13 as illustrated in FIG. 1, it may be seen that each of the charging ports 11, 12, and 13 connected to the external devices is in the normal charging mode state. The concept of the charging mode is meaningful only when the external device is connected to the charging port.

When more current than the normal amount of current in the normal charging mode is supplied to one of the external devices connected to the charging ports, the charging will be faster. Accordingly, the case is defined as a rapid charging mode. The rapid charging mode also is meaningful only when the external device is connected to the charging port.

When one of the charging ports connected to the external devices is the rapid charging mode as described above, the controller 130 controls the amount of current being supplied to the charging port connected to the external device to be increased according to the power connection status for each of the plurality of charging ports 111, 112, and 113.

For example, if the rapid charging mode is set for a first charging port 111 connected to a first external device (not illustrated) in FIG. 2, the controller 130 changes the amount of current to be supplied to the first charging port 111 depending on whether the first charging port 111, a second charging port 112, and a third charging port 113 are connected to the power source 140.

For example if the second charging port 112 and the third charging port 113 are not connected to the power source 140, the controller 130 may supply the first charging port 111 with the amount of current which is ordinarily supplied to the second charging port 112 and the third charging port 113. The controller 130 controls the switch to be opened so that the current, which can be supplied to the other charging ports 112 and 113 from the power source 140, flows into the first charging port 111 by sending a control signal to the switch unit 120. Accordingly, three times the amount of current is provided through the first charging port 111 compared to the normal charging mode. Thus, the external device connected to the first charging port 111 may be charged at a faster rate.

At this time, whether other charging ports are connected to the power source 140 may be determined based on an operation state of the switch unit 120 or by detecting the amount of current flowing into each of the charging ports.

When the rapid charging mode is switched to the normal charging mode, the controller 130 controls the amount of current being supplied to the charging port in which the rapid charging is performed to be decreased.

For example, the first charging port 111 may be switched form the rapid charging mode to the normal charging mode while the controller 130 is supplying the first charging port 111 with the amount of current which can be supplied to the second charging port 112 and the third charging port 113 since the second charging port 112 and the third charging port 113 are not connected to the power source 140 in the above described embodiment. At this time, the controller 130 sends a control signal to the switch unit 120, and thus blocks the corresponding switches so that the current to be supplied to the second and third charging ports 112 and 113 in the normal charging mode does not flow into the first charging port 111. Accordingly, the amount of current flowing into the first charging port 111 is reduced to 1/3 of the previous amount of current in the rapid charging mode.

In the above-described embodiment, all the amount of current which can be provided to the charging ports that are not connected to the external devices may be provided to the charging port set in the rapid charging mode. However, this is only one example. Accordingly, with taking into account occurrence of charging situation of other external devices, only the current which can be provided to some of the charging ports that are not connected to the external devices may be provided to the charging port set in the rapid charging mode.

Alternatively, the rapid charging mode may be separated into a plurality of operations. In other words, the rapid charging mode may be separated into a first rapid charging mode, a second rapid charging mode, ..., and a nth rapid charging mode. Each of the plurality of rapid charging modes may supply the amount of current which is different from one another. If the external devices have the same maximum charge capacity, the charging rate may vary depending on the charging mode.

The power source 140 converts alternating current (AC) power supplied from the external into direct current (DC) power, and then provides some of the DC power to the switch unit 120. The power source 140 provides the switch unit 120 with the total amount of current to be supplied to the plurality of charging ports 111, 112, and 113.

The charging apparatus 100 according to an embodiment may quickly charge the external device to meet the needs of the user by increasing or decreasing the amount of current to be supplied to the charging ports depending on the charging mode and the connection status between the power source and the plurality of charging ports.

Also, if the rapid charging mode is set in one of the plurality of charging ports, the controller 130 may block the current to be supplied to the rest of the charging ports.

For example, it may be considered a case that a first external device (not illustrated) is connected to the first charging port 111, a second external device (not illustrated) is connected to the second charging port 112, and a third external device (not illustrated) is connected to the nth charging port 113 in FIG. 2. In other words, a new external device may be connected to the charging apparatus 100 for charging in a state in which the plurality of external devices is connected to most of the charging ports of the charging apparatus 100. At this time, it is assumed that each of the charging ports 112 and 113 is the normal charging mode.

If the charging of the other external devices is already completed except for the new external device, the fully charged external devices are connected to the charging ports, but do not need to perform the charging. Also, from a user's perspective, to separate one by one the external devices of which the charging is completed from the charging apparatus 100 is uncomfortable.

Accordingly, a method to block the current supply to the charging ports connected to the external devices of which the charging is completed without directly separating the external devices from the charging apparatus is required. Also, the newly connected external device may need the rapid charging.

In the above-described embodiment, if the rapid charging mode is set for the first charging port 111, the controller 130 controls the switch unit 120 to block the current to be supplied to the second charging port 112 and the nth charging port 113. As a result, the current is supplied to only the first charging port 111. At this time, the amount of current to be supplied to the first charging port 111 is the amount of current of the normal charging mode. However, since the controller 130 determines that the power is not supplied to the second charging port 112 and the nth charging port 113 as described above, the controller 130 controls the switch unit 120 to increase the amount of current being supplied to the first charging port 111.

If the rapid charging mode is set for one of the charging ports, the controller 130 may determine an increased width of the amount of the current by considering the type of the external device connected to the charging port. For example, if the external device is a smart phone, the smart phone has a large charging capacity compared to the charging capacity of a MP3 player. Therefore, the smart phone needs to be supplied with a large portion of the total amount of available current. If the external device has a larger charging capacity, it will take more time to complete the charging of the external device when the same amount of current is supplied to the external device. Therefore, a configuration in which the amount of current is supplied is varied depending on the charging capacity of the external device is useful. In an alternative embodiment, the charging apparatus 100 may be configured to receive a user input by displaying a menu in which a type of the connected external device is selected by the user through a display unit (not illustrated). Such user interface unit will be described later.

Also, if the charging mode is changed, the controller 130 may send information for the changing of the charging mode to the external device through the charging port connected to the external device. At this time, the charging port may further include a line for sending data in addition to a line for supplying the current. However, the information for the changing of the charging mode may be sent through different communication interfaces in addition to the charging ports.

In addition, the controller 130 may control to calculate an estimated charging time of the external device which is being charged, and then send the estimated charging time to the external device which is being charged. The estimated charging time may depend on the charging mode, the charging capacity of the external device which is being charged, and a current charge level.

After the charging is completed, the controller 130 indicates completion of charging. Also, the controller 130 indicates a charging state even before the completion of charging. The charging state or the completion of charging may be indicated by at least one of characters, numbers, symbols, colors, and images. Information for the charging state or the completion of charging may be sent to the external devices.

If the charging apparatus 100 is ended before the charging is completed, the charging apparatus 100 is controlled to perform only the minimum operations necessary to charge. The power needed for the charging continues to be supplied, and a circuit for the charging is operated. After the charging is completed, the entire charging apparatus 100 will go into a standby mode. If an external device is connected to the charging port for charging in the standby mode, the power is supplied to the charging circuit so that the charging may be performed according to an embodiment.

The controller 130 may include a central processing unit (CPU), a multipoint control unit (MCU), or a microprocessor unit (MPU) as hardware. The controller 130 may include an operating system and applications as software. Particularly, a kernel of the operating system recognizes the external devices connected to the charging ports, and controls the operation of switch unit 120 of the charging apparatus 100 to increase or decrease the amount of current to be supplied to the charging ports depending on the charging mode.

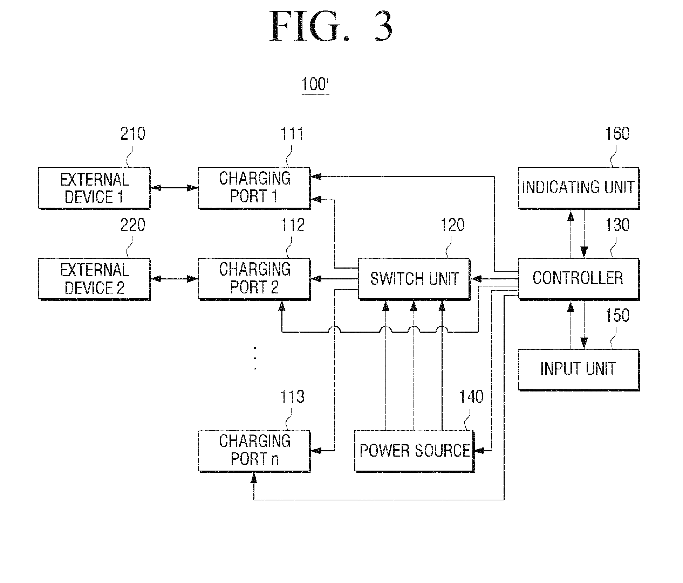

FIG. 3 is a block diagram illustrating a configuration of a charging apparatus 100' according to an embodiment.

Referring to FIG. 3, a charging apparatus 100' according to an embodiment includes charging ports 111, 112, and 113 connected to external devices 210 and 220, a switch unit 120, a power source 140, a controller 130, an indicating unit 160, and an input unit 150.

The external devices 210 and 220 are electronic apparatuses that can be charged through the charging ports 111, 112, and 113 as described above. For example, the external devices 210 and 220 may be mobile electric devices such as cell phones, electronic dictionaries, MP3 players, E-book devices, portable multimedia players (PMPs), tablet computers, etc.

The charging ports 111, 112, and 113, the switch unit 120, the power source 140, and the controller 130 are the same as those of the charging apparatus 100 as previously described except for the content as will be described additionally hereinafter. Therefore, redundant description thereof will be omitted.

The input unit 150 is configured to receive a user input. The user input may include any kind of input to control the charging apparatus 100'.

For example, the user may select a charging mode through the input unit 150. The indicating unit 160 as will be described later indicates a menu for selecting the charging mode on a screen, and thus the user selects the rapid charging mode or the normal charging mode through the input unit 150.

If the rapid charging mode is separated into a plurality of operations as the previously described embodiment, the user input may be performed corresponding to the plurality of operations.

Also, when the user intentionally wants to block the current to be supplied to some of the plurality of charging ports, the user can input blocking of the current supply for a specific port.

Also, when the rapid charging mode is set for the one of the charging ports, and the controller 130 determines the increased width of the amount of the current by considering the types of the external devices connected to the charging ports, the user can directly input the types of the external devices. As described above, the charging apparatus 100' may receive the user input by displaying the menu for selecting the types of the connected external devices through a display unit (not illustrated).

The input unit 150 may be implemented in a variety of hardware configurations. For example, the input unit 150 may be at least one of a remote controller, a keyboard, a touch screen panel, a joystick, and a pointing device.

The indicating unit 160 is configured to indicate information for the user input or charging information for user's convenience.

The information for the user input may include a charging mode select menu, submenus of the rapid charging mode, a current blocking menu for the charging ports, a menu for selecting the types of the external devices connected to the charging ports, etc. In addition, the information for the user input may include menus for a variety of user input.

The charging information may include a charging state, a use state of the charging ports, estimated charging times of the external devices, information for the external devices, etc.

Also, the information for the user input or the charging information may be graphically configured by considering intuitive user interfaces.

The indicating unit 160 may be implemented in a variety of display technologies such as a liquid crystal display panel, a plasma display panel, an organic light emitting diodes (OLED), a vacuum fluorescent display (VFD), a field emission display (FED), an electro luminescence display (ELD), etc.

Also, the indicating unit 160 may further include an audio output unit (not illustrated), and may output the above-described information by sounds such as beep sounds.

In an alternative embodiment, when another external device is connected to a charging port which is not used for the charging of the external devices in the rapid charging mode, the controller 130 may indicate information for whether the other external device can be charged in the indicating unit 160. Here, the information for whether the other external device can be charged refers to information that lets the user know the charging availability depending on whether there is extra power for charging of the newly connected external device. Also, the information about the charging availability may be sent to the newly connected external device. If the external device is provided with a display unit, the external device may indicate the information about the charging availability through the display unit.

Also, the controller 130 may allow the user input to be received through the input unit 150. If there is the user input, the controller 130 may connect the power to the charging port connected to the other external device, and may control current to reduce the amount of current being supplied to the charging port connected to the external device for the rapid charging.

The charging apparatus 100 and 100' according to various embodiments may be implemented as a part of the configuration of a variety of electronic devices. For example, the charging apparatus 100 and 100' may be implemented as one of a set top box, a digital television, a computer, an audio system, and the like.

Hereinafter, a charging method according to various embodiments will be described.

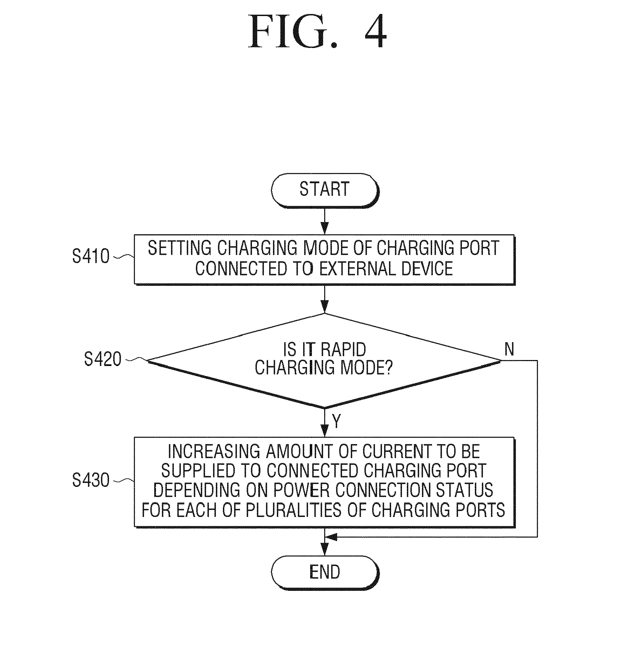

FIGS. 4 to 6 are flowcharts illustrating a charging method according to an embodiment.

Referring to FIG. 4, a charging method according to an embodiment includes setting a charging mode of a charging port connected to an external device (S410), determining whether the charging mode is a rapid charging mode (S420), and increasing an amount of current being supplied to the charging port connected to the external device depending on a power connection status for each of a plurality of charging ports (S430).

The operation of S410 may be set depending on input selected by a user, or by default within the charging apparatus thereby being automatically set when the external device is connected to the charging port.

When the set charging mode is the rapid charging mode, the steps of S420 and S430 are a process to increase the amount of current being supplied to the connected charging port depending on the power connection status for each of the plurality of charging ports including the connected charging port. Description of the process is the same as the description of the charging apparatus according to various embodiments. Therefore, the duplicate description thereof will be omitted.

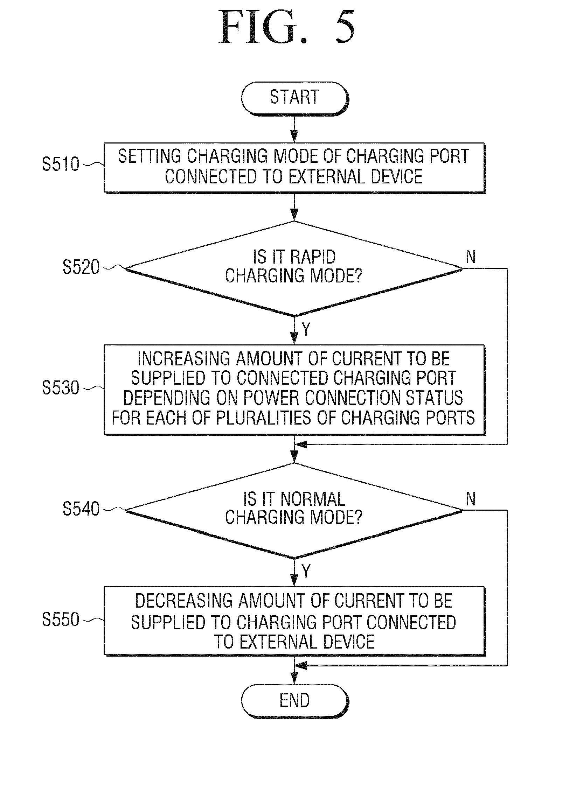

Referring to FIG. 5, a charging method according to an embodiment includes setting a charging mode of a charging port connected to an external device (S510), determining whether the charging mode is a rapid charging mode (S520), increasing an amount of current if it is the rapid charging mode (S530), determining whether the charging mode is a normal charging mode (S540), and decreasing the amount of current if it is the normal charging mode (S550).

The operations of S510, S520, and S530 are the same as the operations of S410, S420, and S430 as described above, therefore, duplicate description thereof will be omitted.

When the set charging mode is the normal charging mode, the operations of S540 and S550 are a process to decrease the amount of current being supplied to the connected charging port. Description of the process is the same as the operation of the controller 130 of the charging apparatus according to various embodiments. Therefore, a duplicate description thereof will be omitted.

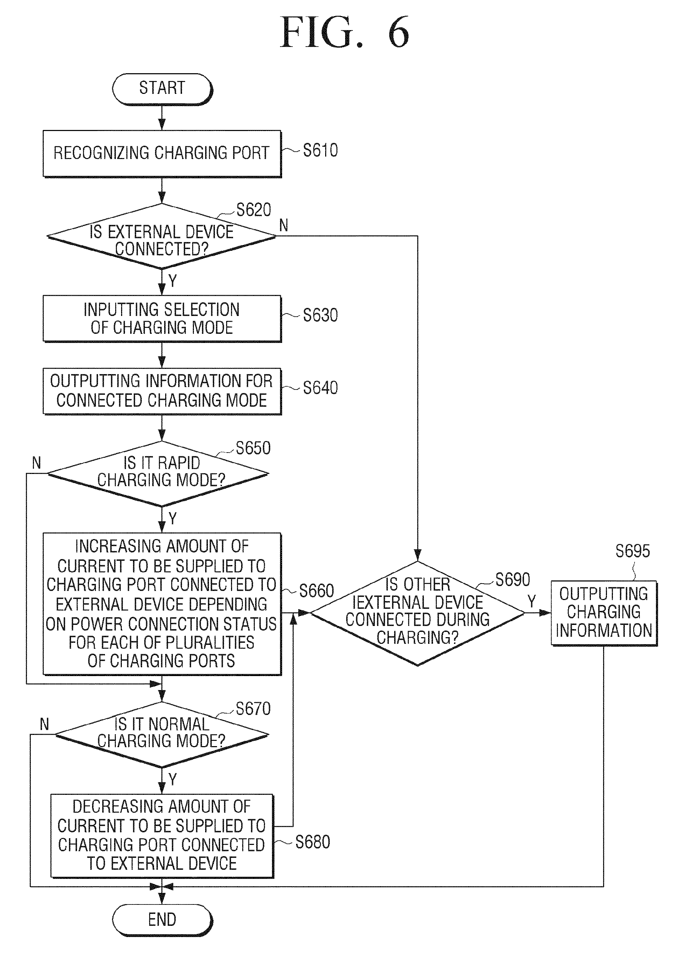

Referring to FIG. 6, a charging method according to an embodiment includes recognizing a charging port (S610), determining whether an external device is connected (S620), receiving selection of a charging mode (S630), outputting information about a connected charging mode (S640), determining whether the charging mode is a rapid charging mode (S650), increasing an amount of current if it is the rapid charging mode (S660), determining whether the charging mode is a normal charging mode (S670), decreasing the amount of current if it is the normal charging mode (S680), determining whether other external device is connected during charging (S690), and outputting charging information if the other external device is connected (S695). Description for each of the operations is the same as the description of the charging apparatus according to various embodiments. Therefore, a duplicate description thereof will be omitted.

The charging method according to various embodiments may be implemented as a program including computer readable instructions which can be executed in a computer or by at least one processor. The program may be stored in a non-transitory computer-readable medium, and thus, may be provided with it.

Contrary to a medium to store data for a short moment, the non-transitory computer-readable medium refers to a medium that can store data in a semi-permanent manner and that can be read by devices. For example, the non-transitory computer readable medium may be one of computer-readable recording media such as a CD, a DVD, a hard disc, a Blu-ray disc, a USB, a memory card, a ROM, an EEPROM, etc.

Although a few embodiments have been shown and described, it would be appreciated by those skilled in the art that changes may be made in these embodiments without departing from the principles of the invention, the scope of which is defined in the claims.

## Claims

1. A charging apparatus comprising:
a plurality of charging ports configured to charge external devices;
a switch unit configured to connect or block power to or from each of the plurality of charging ports; and
a controller configured to control current so that an amount of current being supplied to at least one of the plurality of charging ports is increased depending on a power connection status for each of the plurality of charging ports in a rapid charging mode.

2. The charging apparatus of claim 1, wherein
the controller is configured to control current so that the amount of current being supplied to at least one of the plurality of charging ports is decreased in a normal charging mode.

3. The charging apparatus of claim 1 or 2, wherein
in the rapid charging mode, the controller is configured to control current to block current to be supplied to the plurality of charging ports except for a charging port in which rapid charging is performed.

4. The charging apparatus of any one of claims 1 to 3, further comprising:
an input unit configured to allow a user to select a charging mode.

5. The charging apparatus of any one of the preceding claims, wherein
when another external device is connected to a charging port that is not used for charging of the external devices in the rapid charging mode, the controller indicates information about whether the other external device can be charged in a display unit or sends the information to the other external device.

6. The charging apparatus of claim 5, wherein
when a user input is received, the controller connects the power to the charging port connected to the other external device, and controls current so that the amount of current being supplied to the charging port connected to the external device is decreased.

7. The charging apparatus of any one of the preceding claims, wherein
the controller determines an increased amount of current by considering a type of the external device in the rapid charging mode.

8. The charging apparatus of any one of the preceding claims, wherein
when a charging mode is changed, the controller sends information for changing of the charging mode to the external device connected to the charging port of which the charging mode is changed.

9. The charging apparatus of any one of the preceding claims, wherein
the controller calculates an estimated charging time of the external device which is being charged, and sends the estimated charging time to the external device which is being charged.

10. The charging apparatus of any one of the preceding claims, wherein
when a power of the charging apparatus is turned off, the controller maintains current supply for the charging port connected to the external device being charged, and, after the charging is completed, controls the charging apparatus to go into a standby mode.

11. A charging method comprising:
setting a charging mode of a charging port connected to an external device; and
increasing, if the set charging mode is a rapid charging mode, an amount of current being supplied to the connected charging port depending on a power connection status for each of a plurality of charging ports including the connected charging port.

12. The charging method of claim 11, further comprising:
decreasing, if the set charging mode is a normal charging mode, the amount of current being supplied to the connected charging port.

13. The charging method of claim 11 or 12, further comprising:
blocking, if the set charging mode is the rapid charging mode, current to be supplied to the rest of the plurality of charging ports except for the connected charging port.

14. The charging method of any one of claims 11 to 13, further comprising:
receiving a user input for selecting the charging mode.

15. The charging method of any one of claims 11 to 14, further comprising:
indicating information about whether another external device can be charged in a display unit or sending the information to the other external device, if the other external device is connected to a charging port that is not used for charging of the external device, when the set charging mode is the rapid charging mode.
